Europäisches Patentamt

European Patent Office

Office européen des brevets

(11) Publication number: **0 162 197**
**A2**

# EUROPEAN PATENT APPLICATION

(21) Application number: **85101872.1**

(22) Date of filing: **21.02.85**

(51) Int. Cl.⁴: **A 01 B 9/00**
**A 01 B 15/16**

(30) Priority: **22.05.84 JP 75256/84**

(43) Date of publication of application:
**27.11.85 Bulletin 85/48**

(84) Designated Contracting States:
**DE FR GB IT**

(71) Applicant: **STAR FARM MACHINERY MFG. CO., LTD.**
**No. 1061-2, Kamiosatsu**
**Chitose-shi Hokkaido(JP)**

(72) Inventor: **Iwasa, Junichi**
**No. 3-11, 1-chome Inaho-cho**
**Chitose-shi Hokkaido(JP)**

(72) Inventor: **Kondo, Tetsuhiko**
**No. 2019-181, Hinodegaoka**
**Chitose-shi Hokkaido(JP)**

(72) Inventor: **Yanagisawa, Hisatoshi**
**No. 143, Midori-cho**
**Eniwa-shi Hokkaido(JP)**

(74) Representative: **LOUIS, PÖHLAU, LOHRENTZ & SEGETH**
**Kesslerplatz 1 P.B. 3055**
**D-8500 Nürnberg(DE)**

(54) **Disk plow.**

(57) A plurality of plowing blade bodies are attached to a gang shaft which in turn is disposed at an angle with respect to the direction of travel, and are spaced apart from each other by a suitable distance in the axial direction of the gang bolt. Each plowing blade body comprises a plurality of segment-like blades and a plurality of cutaway or notched blade portions equiangularly spaced apart from each other. Therefore the top view of each plowing blade body looks like a flower. Furthermore, each plowing blade body is in the form of a saucer. The plowing blade bodies are attached to the gang bolt such that the cutaway or notched blade portions of the adjacent plowing blade bodies are out of phase with respect to each other.

## BACKGROUND OF THE INVENTION

The present invention relates to a disk plow which can make plowed soil permiable to both air and water and whose maintainace is much facilitated.

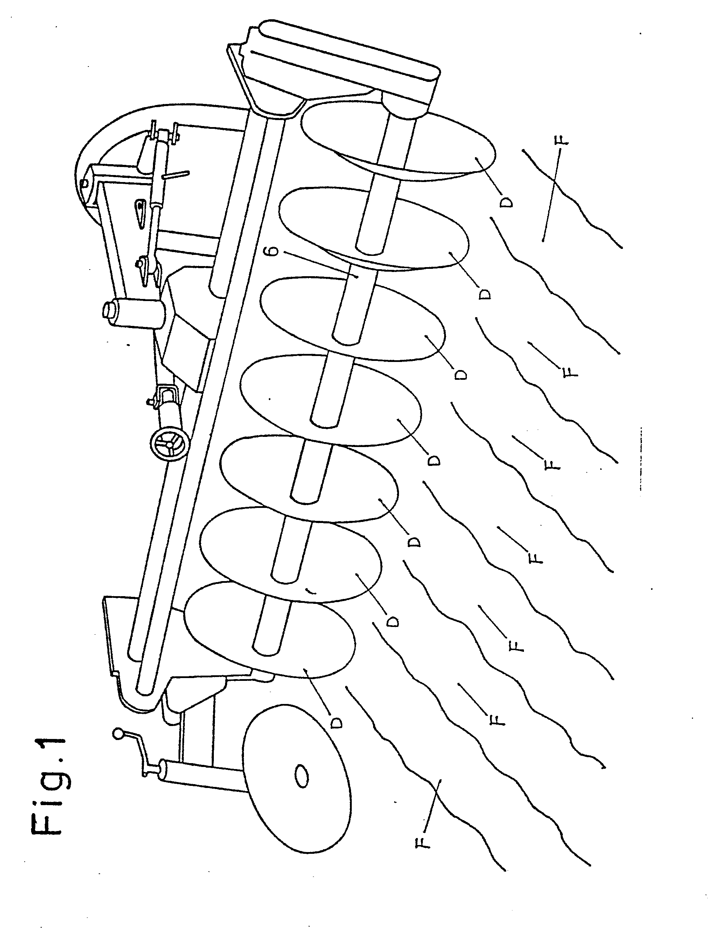

The disk plow of the type described is, for instance, disclosed in Japanese Utility Model Application laid open under No. 54201/1982. This disk plow comprises a plurality of saucer-like disks D attached to one axle or gang shaft 6. The disks D have no "cutaway blade" portions around their peripheries so that the soil is pressed by the whole surfaces of the disks D and is turned. As a result, the plowed soil shows continuous band-like surfaces F as shown in Fig. 1 so that the plowed soil lacks air and water permiability. Furthermore, the conventional plowing means comprises a unitary disk so that when the disk is broken, the broken disk must be removed out of a plurality of disks carried by a gang bolt and replaced with a new one. Thus, the conventional disk plows are complicated in assembling.

## BRIEF DESCRIPTION OF THE DRAWINGS

Fig. 1 is a rear perspective view of a conventional disk plow illustrating the plowed condition of soil;

Fig. 2 is a rear perspective view of a disk plow in accordance with the present invention illustrating the plowed condition of soil;

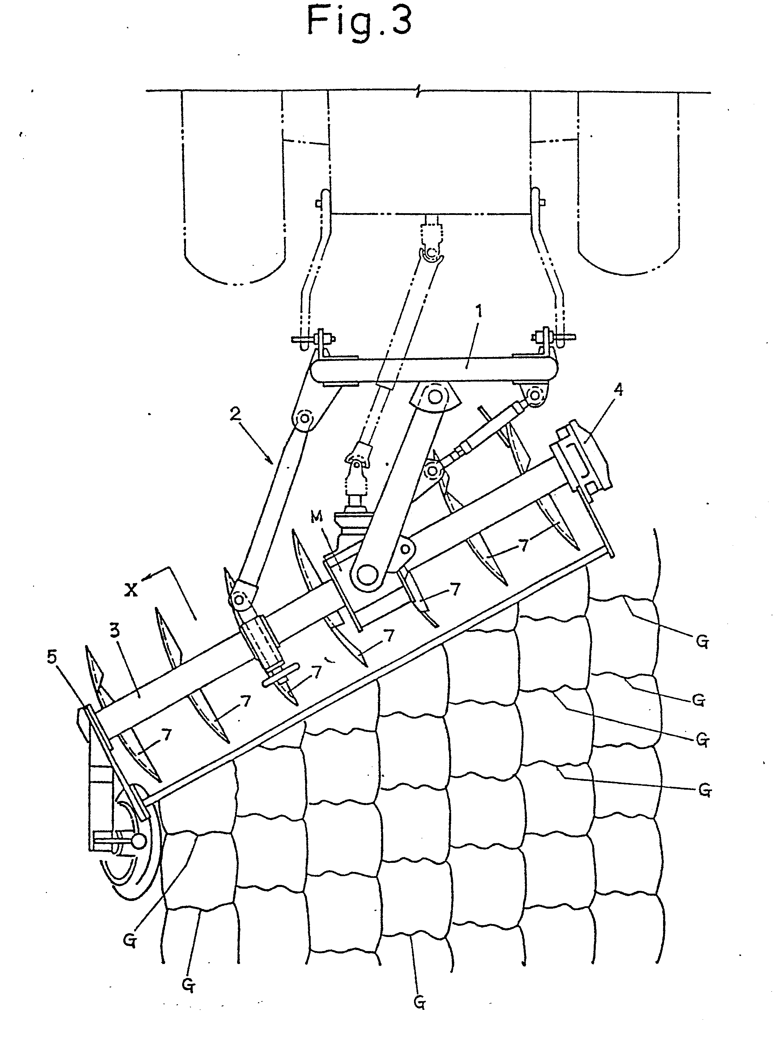

Fig. 3 is a top view thereof;

Fig. 4 is a view looking in the direction indicated by the arrow X in Fig. 3; and

Fig. 5 is a rear view thereof.

0162197

## DETAILED DESCRIPTION OF THE PREFERRED EMBODIMENT

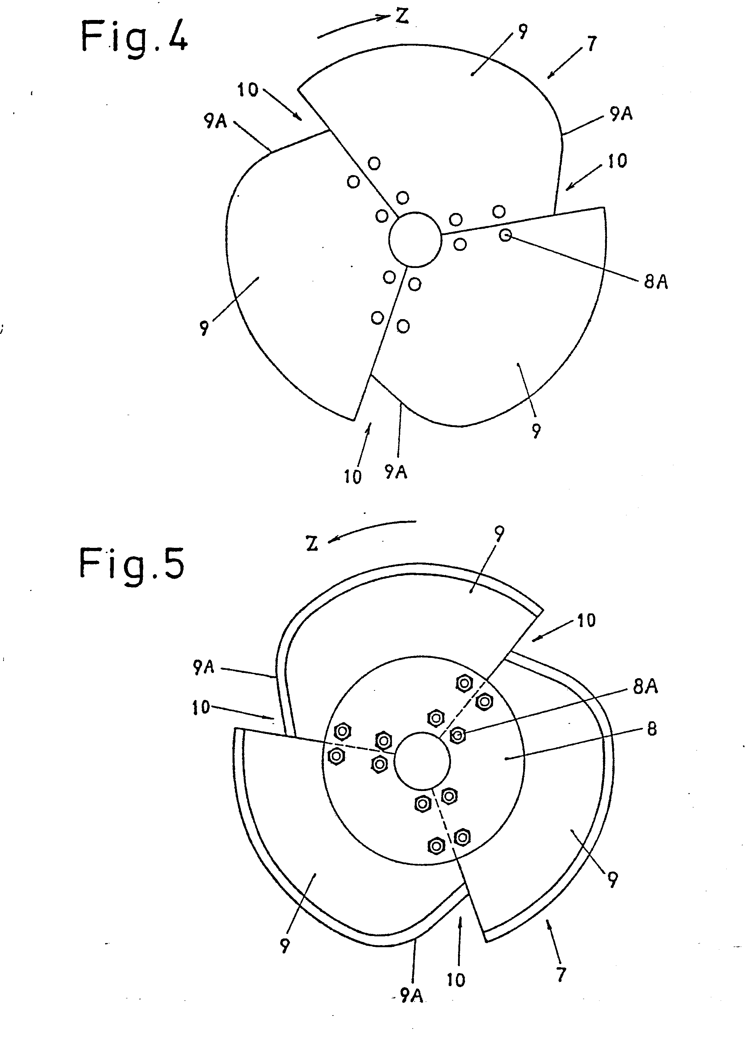

A frame 3 is attached at an angle with respect to the direction of travel to a three-point frame 1 through a parallel linkage 2. A chain drive 4 is attached to one end of the frame 3 and a bracket 5 is attached to the other end thereof. A gang shaft 6 extends in parallel with the frame 3 between the chain drive 4 and the bracket 5. A plurality of plowing blade bodies 7 are attached to the gang shaft 6 and are spaced apart from each other by a suitable distance. As best shown in Fig. 5, each plowing blade body 7 comprises a plurality of blades 9 which in turn are securely fixed with bolts 8A to a boss 8. Each blade is curved in the axial direction of the gang shaft 6 in cross section and its outer edge forms a cutting edge. The cutting edge has a curved portion 9A which is directed toward the direction of rotation Z. When these baldes 9 are assembled as shown in Fig. 4 or 5, the plowing blade body 7 has cutaway or notched blade portions 10. These plowing blade bodies 7 are attached to the gang bolt 6 with the cutaway blade portions $P_1$, $P_2$, $P_3$ ... and $P_7$, $Q_1$, $Q_2$, $Q_3$ ... and $Q_7$ and $R_1$, $R_2$, $R_3$ ... and $R_7$ being out of phase with respect to each other.

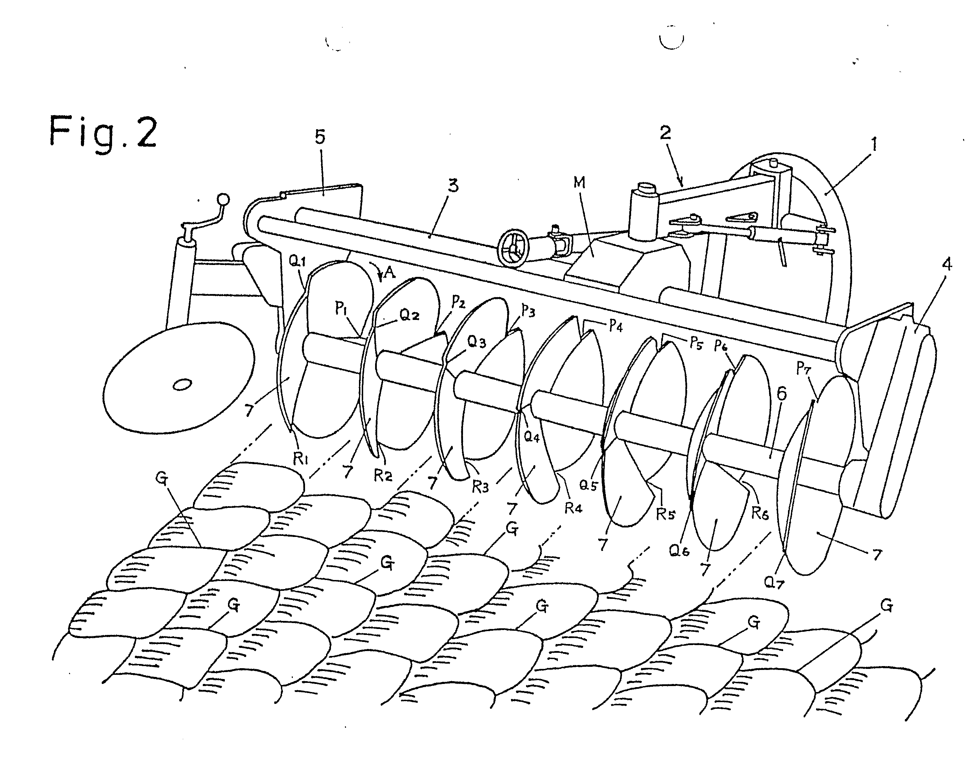

Next the mode of operation of the disk plow in accordance with the present invention will be described. The power of a tractor is transmitted through a transmission M to the chain drive 4 so that the plowing blade bodies 7 are rotated in the direction indicated by the arrow A (See Fig. 2) to cut and turn the soil. In this case, the

0162197

- 1 -

What is claimed is:

1. A disk plow comprising an axle or gang shaft (6) disposed at an angle with respect to a direction of travel and a plurality of plowing blade bodies (7) attached to the axle, each plowing blade body having a cross section curved in an axial direction of said axle and including a plurality of cutaway or notched blade portions (10) along its out periphery.

2. A disk plow as set forth in Claim 1 wherein said cutaway blade portions $(P_1,P_2...,Q_1,Q_2...,R_1,R_2...)$ of .adjacent plowing blade bodies are out of phase with each other.

3. A disk plow as set forth in Claim 1 wherein each plowing blade body comprises a plurality of blades (9) attached to a boss (8) which is .adapted to be fitted over said axle.

whole plowing blade body 7 does not plow the soil. That is, the plowing blade body 7 has the cutaway blade portions 10 which do not press the soil. As a result, the plowed soil has no bank-like surface, but has cuts G which are made by the cutaway blade portions 10. Because the cuts G are formed, the cultivated or plowed soil has better air and water permiability. The plowing blade bodies 7 are attached to the gang shaft 6 with the cutaway blade portions 10 of the adjacent plowing blade bodies being not in phase with respect to each other. As a result, when the plowing blade bodies 7 cut and turn the soil, the cultivating or plowing resistance is distributed to respective plowing blade bodies 7 so that the smooth cultivating or plowing operation with less vibration can be carried out. Furthermore, according to the present invention, each plowing blade body 7 comprises a plurality of blades 9 so that the problem of the conventional disk plow that a broken disk must be removed out of a plurality of disks attached to a long gang bolt and replaced with a new one can be overcome. In other words, according to the present invention, merely a broken blade 9 is replaced with a new one in a very simple manner.

0162197

Fig.1

6

D

D

D

D

D

D

D

D

F

F

F

F

F

F

F

F

F

1/4

0162197

# Fig.2

Fig.3

3/4

0162197

Fig.4

Z

9

7

10

9A

9A

10

8A

9

9

9

10

9A

Fig.5

Z

9

10

9A

8A

10

8

9

9

9

7

9A

10